# EUROPEAN PATENT APPLICATION

(11) **EP 1 724 995 A2**
(43) Date of publication of application: **22.11.2006**
(21) Application number: 06009375.4
(22) Date of filing: 05.05.2006
(51) Int. Cl.: H04M 1/05, H04B 1/38, G04G 17/08, H04M 1/02

(54) **Portable terminal having a plurality of hinged housing sections**

(30) Priority: 18.05.2005 KR 20050041508
(71) Applicant: Samsung Electronics Co., Ltd., Suwon-si, Gyeonggi-Do (KR)
(72) Inventor: Sim, Dae-Hyun, Yeongtong-gu Suwon-si Gyeonggi-do (KR); Lee, Kang-Hoon, Yeongtong-gu Suwon-si Gyeonggi-do (KR); Lee, Cheong-Sun, Yeongtong-gu Suwon-si Gyeonggi-do (KR)
(74) Representative: Grünecker, Kinkeldey, Stockmair & Schwanhäusser Anwaltssozietät

(57) **Abstract**

A portable terminal (10) having a number of housing sections (31-36) that rotate and bend relative to one another while containing their own printed circuit boards "PCBs" to be easily worn on the user's body. The portable terminal (10) includes various components mounted thereon and includes a plurality of PCBs having the components corresponding to each function of the terminal (10) mounted thereon, while being electrically connected to one another, a plurality of housing sections (31-36) that each contain one of the PCBs, and hinge devices (40) for connecting the housing sections (31-36).

## Description

### BACKGROUND OF THE INVENTION

### 1. Field of the Invention

The present invention relates generally to a portable terminal, and more particularly to a portable terminal having a number of housings including their own PCBs.

### 2. Description of the Related Art

In general, portable terminals are tending to be more highly sensitive, compact, and lightweight, in line with the overall trend of electronic components. In addition to the common types of mobile terminals, i.e., bar-type, flip-type, folder-type, etc., wearable terminals, which are worn by a user one their body or clothes, have been developed, e.g., a watch-type terminal that is worn around a user's wrist.

Recently, portable terminals incorporate various additional functions. For example, mobile terminals now include components that enable them to function as electronic organizers, diaries, telephone books, and cameras. As a result, the number of components increases while the PCB's size is limited by the small size of the portable terminal.

For example, the PCB must remain thin, even when portable terminals tend to have higher performances and more functions. Generally, components used in portable terminals become thicker, as they incorporate complex functions and become modular. Therefore, as more functions are added to the portable terminal, the PCB's thickness inevitably increases.

Not only conventional pin-type components are mounted on the PCB, but also components of BGA (ball grid array), CSP (chip scale package), and LGA (land grid array) types can be used. Although PCB size may be reduced, not all components can be mounted in this manner.

An SMT (surface mounting technology) is widely used to mount components on the PCB. In addition, SMDs (surface mounting devices) having different sizes and thicknesses are mounted on the PCB.

Accordingly, as described above, a conventional portable terminal PCB increases in thickness and size to mount all necessary components thereon. This is an obstacle to making the terminals in a compact size.

Further, as the terminals become thicker and larger due to the bulky PCB, they must be carried in pockets, in separate bags, or by hand while being exposed to the danger of theft. In addition, it is difficult to adapt these larger terminals to be worn on a user's body.

In an attempt to solve this problem, watch-type terminals have been developed, which are worn around a user's wrist. However, the watch-type terminals still have a limitation to reducing the size and thickness of the PCB and are inconvenient to be worn around the user's wrist. Consequently, the conventional watch-type terminals fail to meet users' requests for a new type of wearable terminals.

In addition, recent portable terminals incorporate a function for monitoring a user's health condition. However, the thick and large terminals cannot perform real-time monitoring as desired.

### SUMMARY OF THE INVENTION

Accordingly, the present invention has been designed to solve the above and other problems occurring in the prior art. An object of the present invention is to provide a portable terminal having a number of housing sections connected to one another, which include their own PCBs, are easily worn by a user, and improve the portability of the terminal.

Another object of the present invention is to provide a portable terminal having a number of PCBs, on which components corresponding to each function of the terminal are separately mounted, such that the terminal has a compact size from the reduced size and thickness of the PCBs.

Still another object of the present invention is to provide a portable terminal having housing sections that bend to be worn on a user's body (wrist or arm), and include PCBs provided with bio-sensors, for real-time monitoring of the user's health condition including pulse, blood pressure, and blood glucose level.

In order to accomplish the above and other objects, there is provided a portable terminal having various components mounted thereon. The terminal includes: a plurality of PCBs having components corresponding to each function of the terminal mounted thereon, respectively, while being electrically connected to one another; a plurality of housing sections adapted to contain the PCBs, respectively; and hinge devices adapted to connect the housing sections in such a manner that they can rotate and bend relative to one another.

In accordance with another aspect of the present invention, there is provided a portable terminal having various components mounted thereon. The terminal includes: a plurality of PCBs having components corresponding to each function of the terminal mounted thereon, respectively, and being electrically connected to one another; a plurality of housing sections adapted to contain the PCBs, respectively; and tube housings having the housing sections fastened to or released from the interior thereof, respectively, to connect them to each other in such a manner that they can freely bend.

### BRIEF DESCRIPTION OF THE DRAWINGS

The above and other objects, features, and advantages of the present invention will be more apparent from the following detailed description taken in conjunction with the accompanying drawings, in which:
FIG. 1 is a perspective view illustrating a portable terminal according to a first embodiment of the present invention;
FIG. 2 illustrates a PCB of a portable terminal according to the first embodiment of the present invention;
FIG. 3 is a perspective view illustrating a portable terminal, during service, according to the first embodiment of the present invention;
FIG. 4 is a perspective view illustrating housing sections of a portable terminal, when folded on another, according to the first embodiment of the present invention;
FIG. 5 illustrates a wire connector for connecting PCBs of a portable terminal according to the first embodiment of the present invention;
FIG. 6 is a perspective view illustrating a portable terminal according to a second embodiment of the present invention;
FIG. 7 is a perspective view magnifying part A as illustrated in FIG. 6; and
FIG. 8 is a perspective view illustrating a portable terminal, during service, according to the second embodiment of the present invention.

### DETAILED DESCRIPTION OF THE PREFERRED EMBODIMENT

Hereinafter, preferred embodiments of the present invention will be described with reference to the accompanying drawings. In the following description of the present invention, a detailed description of known functions and configurations incorporated herein is omitted when it may obscure the subject matter of the present invention.

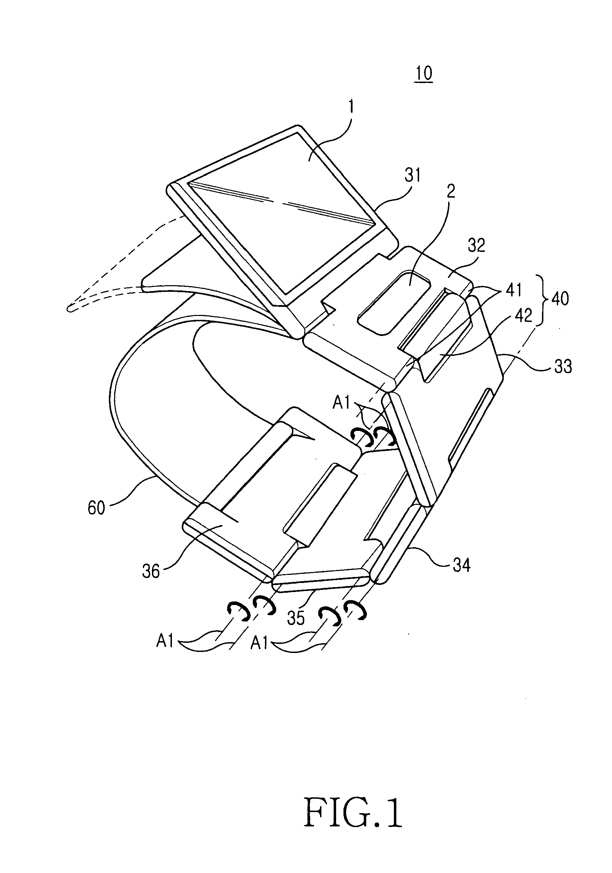

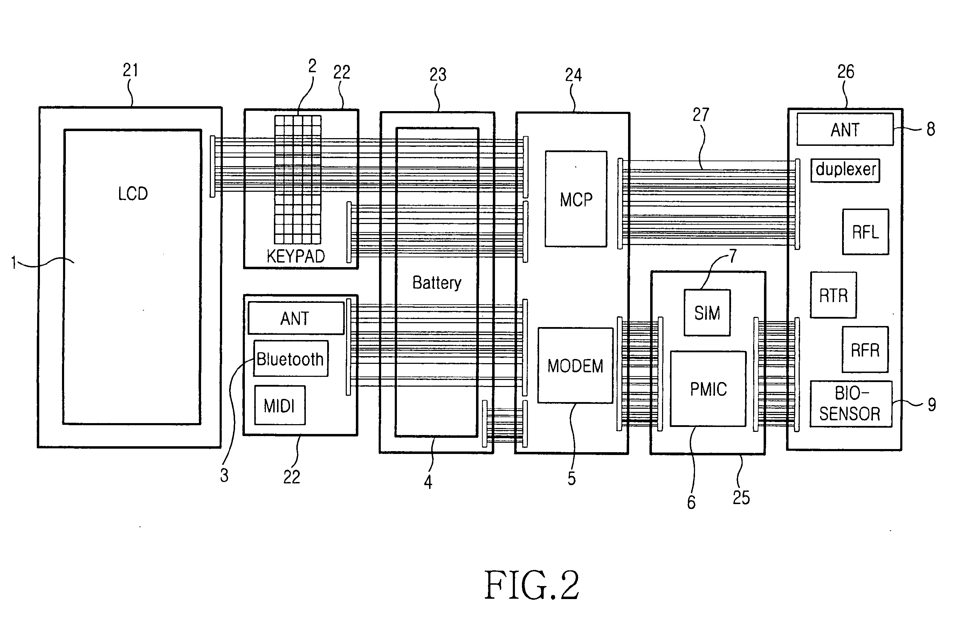

FIG. 1 is a perspective view illustrating a portable terminal according to a first embodiment of the present invention. Referring to FIG. 1, a portable terminal 10 includes at least one housing section 31-36, each housing section containing its own PCB 21-26 (shown in FIG. 2) and at least one hinge device 40. The PCBs 21-26 have respective components mounted thereon, which correspond to each function of the terminal. Additionally, the PCBs 21-26 are connected to each other.

The hinge devices 40 are positioned on the connections between the respective housing sections 31-36 and enable the housing sections 31-36 to rotate and bend relative to each other, such that the portable terminal 10 can be easily worn on a user's body, e.g., wrist.

Referring to FIGs. 1 and 2, the first housing section 31 contains the first PCB 21, which has an LCD 1 mounted thereon, and is connected to the second housing section 32 by one of the hinge devices 40 in such a manner that it can rotate and bend relative to the second housing section 32. The second housing section 32 contains the second PCB 22, which has a keypad device 2, a Bluetooth module 3, a Bluetooth antenna, and a MIDI chip mounted thereon, and is connected to the third housing section 33 by one of the hinge devices 40 in such a manner that it can rotate and bend relative to the third housing section 33. The third housing section 33 contains the third PCB 23, which has a battery device 4 mounted thereon, and is connected to the fourth housing section 34 by one of the hinge devices 40 in such a manner that it can rotate and bend relative to the fourth housing section 34. The fourth housing section 34 contains the fourth PCB 24, which has a modem 5 and an MCP mounted thereon, and is connected to the fifth housing section 35 by one of the hinge devices 40 in such a manner that it can rotate and bend relative to the fifth housing section 35. The fifth housing section 35 contains the fifth PCB 25, which has a PMIC (Power Management Integrated Circuit) 6 and a SIM (Subscriber Identity Module) 7 mounted thereon, and is connected to the sixth housing section 36 by one of the hinge devices 40 in such a manner that it can rotate and bend relative to the sixth housing section 36. The sixth housing section 36 contains the sixth PCB 26, which has an antenna device 8, an RF (Radio Frequency) and a bio-sensor 9 mounted thereon, and is connected to a band member 60, which will be described later in more detail.

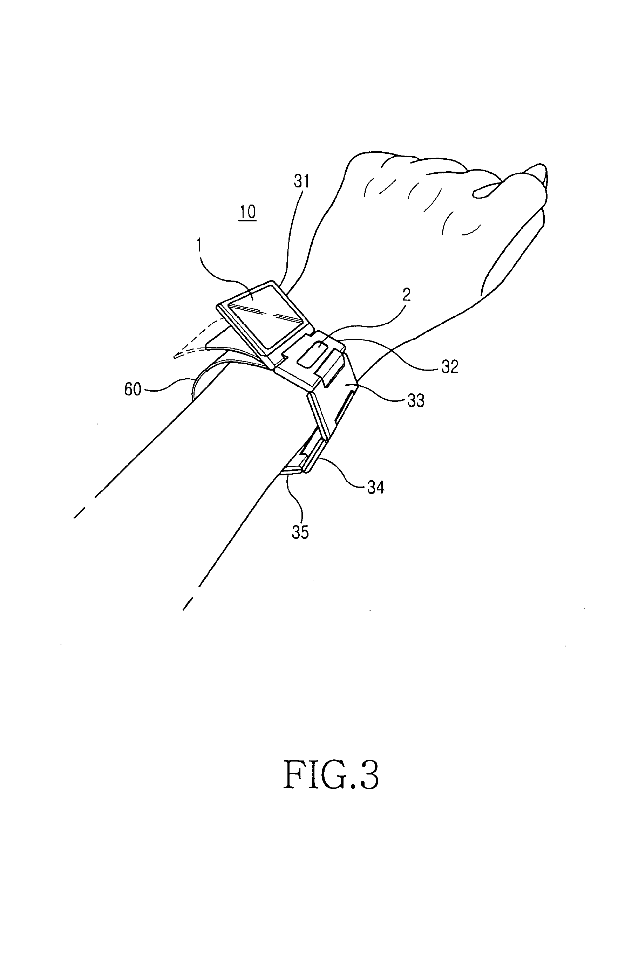

FIG. 3 is a perspective view illustrating a portable terminal, during service, according to the first embodiment of the present invention. Referring to FIGs. 1 and 3, the band member 60 connects an end of the first housing section 31 to an end of the sixth housing section 36 in such a manner that they can move relative to each other. Further, the hinge devices 40 includes a pair of side hinge arms 41 and a center hinge arm 42 to couple the housing sections 31-36 to one another in such a manner that they can rotate about hinge axes A1.

As illustrated in FIG. 2, the PCBs 21-26 are electrically connected to one another by flexible circuits 27.

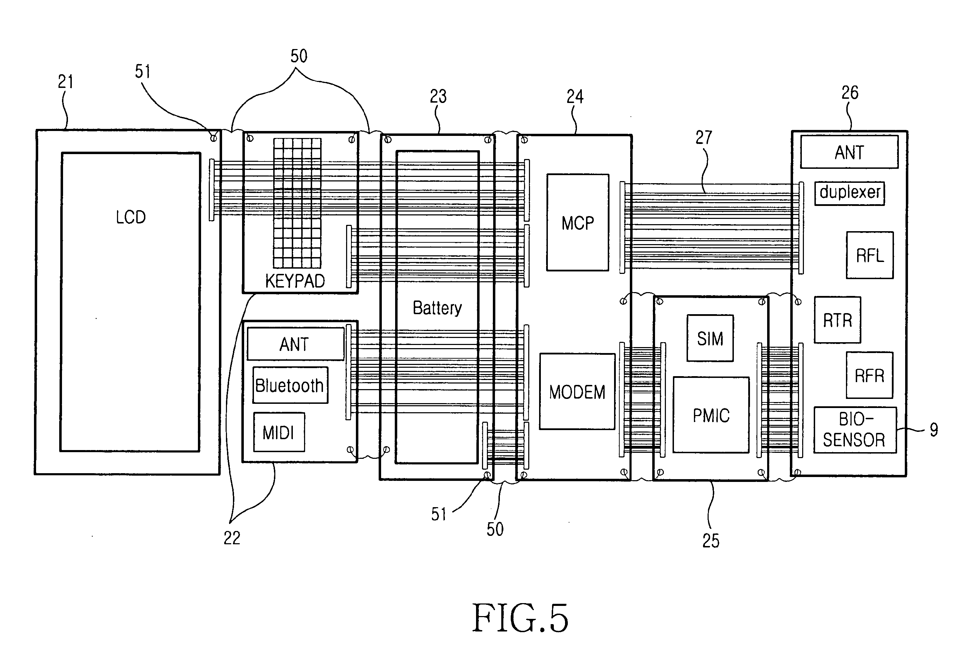

FIG. 5 illustrates a wire connector for connecting PCBs of a portable terminal according to the first embodiment of the present invention. Referring to FIG. 5, the PCBs 21-26 have at least one connection hole 51 formed thereon, through which a wire connector 50 (described later) extends to connect the PCBs 21-26 to one another while being electrically connected to the ground (not shown) of the PCBs 21-26.

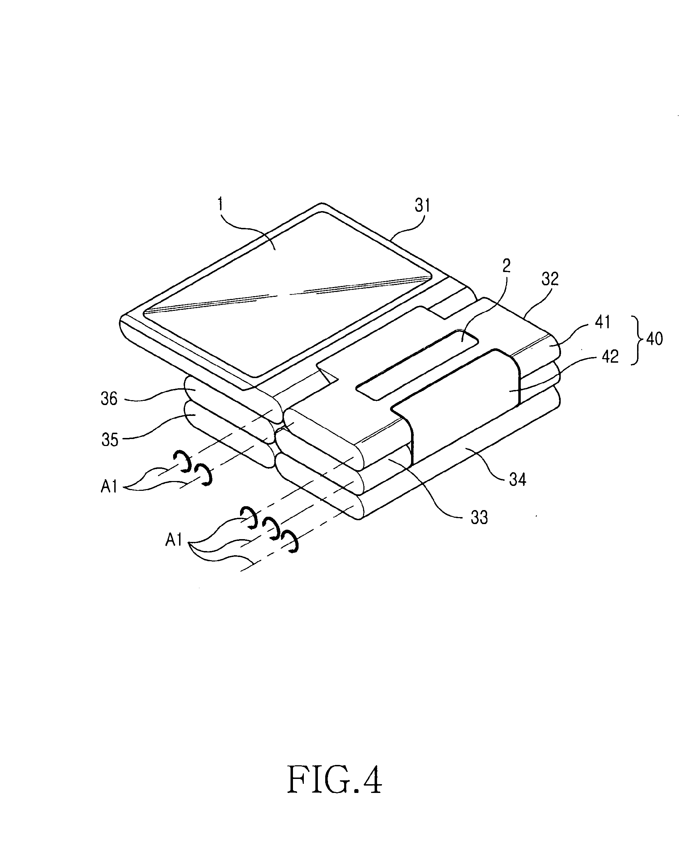

FIG. 4 is a perspective view illustrating housing sections of a portable terminal, when folded on another, according to the first embodiment of the present invention. As illustrated in FIG. 4, when the mobile terminal is not being worn by a user, the housing sections 31-36 are rotated about the hinge axes A1 and are completely folded on one another.

Additionally, the PCBs 21-26 may have an external connector (not shown) for electrical connection to an external electronic appliance (not shown).

As described above, when the user wants to wear the portable terminal on the body, particularly on the wrist, as illustrated in FIGs. 1 and 3, the housing sections 31-36 are bent a predetermined angle about the hinge axes A1 of the hinge devices 40, respectively. As the housing sections 31-36 are bent, the overall shape of the mobile terminal is formed into a band that is wearable around the wrist.

Thereafter, the user's wrist is inserted into the bent housing sections 31-36 and the band member 60 is drawn to fasten the housing sections 31-36 around the wrist.

Preferably, the band member 60 connects the housing sections 31-36 in such a manner that they can move relative to one another.

In this state, the bio-sensor 9 mounted on the sixth PCB 26 can be used for real-time monitoring of the user's health condition and transmission of corresponding signals to the hospital.

Additionally, when the user does not want to wear the terminal 10 any longer, as illustrated in FIG. 4, the housing sections 31-36 are rotated about the hinge axes A1 of the hinge devices 40 so that the housing sections 31-36 are completed folded on one another.

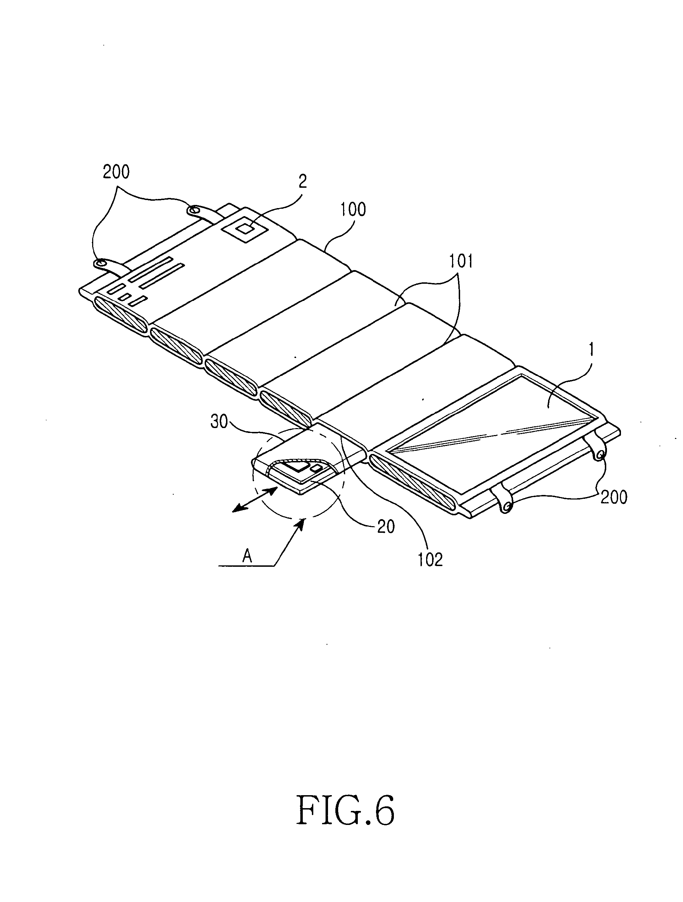

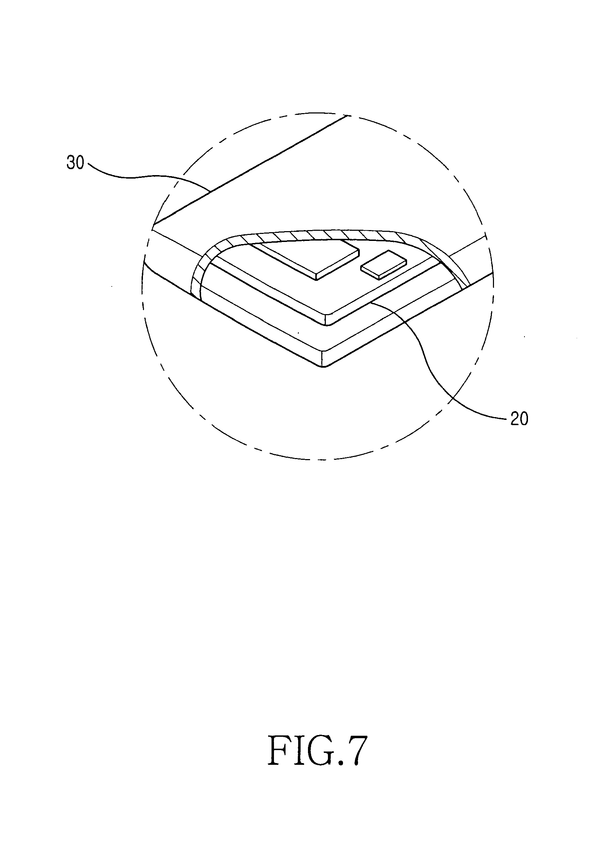

FIG. 6 is a perspective view illustrating a portable terminal according to a second embodiment of the present invention and FIG. 7 is a perspective view magnifying part A illustrated in FIG. 6. Referring to FIGs. 6 and 7, the portable terminal has housing sections 30, which separately contain a PCB 20. The PCBs 20, on which components corresponding to each function of the terminal are mounted, are contained in each housing sections 30 and are electrically connected to one another.

The housing sections 30 are inserted into and mounted on tube housings 100, respectively, as illustrated in FIG. 6. More specifically, each tube housings 100 has an insertion hole 102 formed therein, into which a housing sections 30 is inserted.

As illustrated in FIG. 6, the tube housing 100 has at least one connection portion, which is connected to the lateral surface thereof and has a bending groove 101 so that the tube housing 100 can bend relative to a connected tube housing.

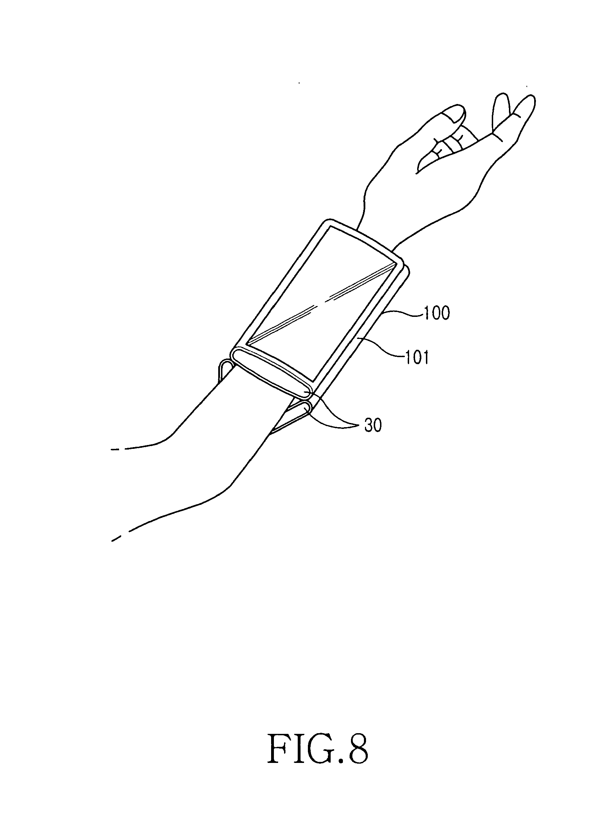

When the user wants to wear the portable terminal on the body, particularly on the wrist, as illustrated in FIG. 8, the tube housings 100 are bent a predetermined angle using the bending grooves 101 formed thereon. As the tube housings 100 are bent, the portable terminal forms a band shape that is wearable around the wrist.

The bent tube housings 100 are wrapped around the wrist, as shown in FIG. 6, and are fastened thereto using fastening devices 200 provided on the tube housings 100.

Preferably, the tube housings 100 are made of a flexible material for easy bending.

As described above, the portable terminal according to the present invention is advantageous in that individual housings each contain their own PCB, on which components corresponding to each function of the terminal are mounted, such that the housings can rotate and bend to be worn on a user's body and improve the portability of the terminal.

While the present invention has been shown and described with reference to certain preferred embodiments thereof, it will be understood by those skilled in the art that various changes in form and details may be made therein without departing from the scope of the present invention as defined by the appended claims.

## Claims

1. A portable terminal for performing various functions corresponding to various components mounted therein, the terminal comprising:
a plurality of printed circuit boards (PCBs), each of the PCBs having a component corresponding to a function of the terminal mounted thereon, , and being electrically connected to the other PCBs;
a plurality of housing sections, each of the plurality of housing sections for containing at least one of the plurality of PCBs; and
a plurality of hinge devices for hingedly connecting the housing sections.

2. The portable terminal as claimed in claim 1, wherein each of the plurality of hinge devices comprises a pair of side hinge arms and a center hinge arm to connect the housing sections.

3. The portable terminal as claimed in claim 2, wherein the plurality of housing sections are bent about a hinge axes, thereby forming a band to be worn by a user, when the portable terminal is worn on the user's body, and are rotated about the hinge axes to be completely folded on each other, when the portable terminal is not worn by the user.

4. The portable terminal as claimed in claim 1, wherein the plurality of PCBs are electrically connected to each other using flexible circuits.

5. The portable terminal as claimed in claim 1, wherein each of the plurality of PCBs has at least one connection hole formed thereon, through which a wire connector extends to connect the plurality of PCBs to ground.

6. The portable terminal as claimed in claim 1, further comprising a band member to connect a first and a last of the plurality of housing sections to each other.

7. The portable terminal as claimed in claim 1, wherein at least one of the plurality of PCBs has a connector for connection to an exterior device.

8. The portable terminal as claimed in claim 1, further comprising:
a modem module;
an LCD module;
a keypad module;
an RF module;
a battery module; and
an antenna module,
wherein each of the modules is mounted one of the plurality of PCBs, respectively.

9. The portable terminal according to one of the previous claims, wherein the terminal is wearable and comprises:
a first housing section including a first printed circuit board (PCB) having components of an LCD (Liquid Crystal Display) mounted thereon;
a second housing section containing a second PCB having components of a keypad mounted thereon and being hingedly connected to the first housing section by a hinge device;
a third housing section containing a third PCB having components of a battery mounted thereon and being hingedly connected to the second housing section by a hinge device;
a fourth housing section containing a fourth PCB having components of a modem and a memory mounted thereon and being hingedly connected to the third housing section by a hinge device;
a fifth housing section containing a fifth PCB having components of an antenna mounted thereon and being hingedly connected to the fourth housing section by a hinge device; and
a sixth housing section containing a sixth PCB having components of a radio frequency (RF) transceiver and being hingedly connected to the fifth housing section by a hinge device.

10. The portable terminal as claimed in claim 9, wherein any one of the first through six PCBs has a bio-sensor mounted thereon.

11. The portable terminal as claimed in claim 9, wherein any one of the first through six PCBs has components for short-range wireless communication mounted thereon.

12. A portable terminal for performing various functions corresponding to various components mounted therein, the terminal comprising:
a plurality of printed circuit boards (PCBs), each of the PCBs having a component corresponding to a function of the terminal mounted thereon, and being electrically connected to the other PCBs;
a plurality of housing sections, each of the plurality of housing sections containing at least one of the PCBs; and
a plurality of tube housings, each of the plurality of tube housings for receiving one of the housing sections therein, and being flexibly connected to each other.

13. The portable terminal as claimed in claim 12, wherein the tube housings have a bending groove formed on the connection portion thereof, through which the housing sections are connected to one another, such that the tube housings can bend.

14. The portable terminal as claimed in claim 12, wherein the tube housings are made of a flexible material.

15. The portable terminal as claimed in claim 12, wherein the tube housings contain a flexible circuit to electrically connect the PCBs.

16. The portable terminal as claimed in claim 12, further comprising fastening devices for connecting a first and a last of the tube housings to each other in order to fasten the portable terminal to a user.

17. A portable terminal for performing various functions corresponding to various components mounted therein, the terminal comprising:
a plurality of printed circuit boards (PCBs), each of the plurality of PCBs having a component corresponding to a function of the terminal mounted thereon, and being electrically connected to each other within individual housings in such a manner that the housings rotate and bend relative to each other.
